# EUROPEAN PATENT SPECIFICATION

(11) **EP 4 236 022 B1**
(45) Date of publication and mention of the grant of the patent: **04.03.2026**
(21) Application number: 22853286.7
(22) Date of filing: 11.07.2022
(51) Int. Cl.: H02J 7/34, H02J 7/00, H02J 7/14, B60L 58/18, B60L 3/00, B60L 58/12, B60L 58/13, B60L 58/20, B60L 58/22

(54) **BATTERY CONTROL APPARATUS, OPERATION METHOD THEREOF, AND BATTERY CONTROL SYSTEM**
BATTERIESTEUERUNGSVORRICHTUNG, BETRIEBSVERFAHREN DAFÜR UND BATTERIESTEUERUNGSSYSTEM
DISPOSITIF DE COMMANDE DE BATTERIE, SON PROCÉDÉ DE FONCTIONNEMENT ET SYSTÈME DE COMMANDE DE BATTERIE

(30) Priority: 02.08.2021 KR 20210101623
(43) Date of publication of application: 30.08.2023
(73) Proprietor: LG Energy Solution, Ltd., Seoul 07335 (KR)
(72) Inventor: CHOI, Yean Sik, Daejeon 34122 (KR)
(74) Representative: Plasseraud IP
(86) International application number: PCT/KR2022/010029
(87) International publication number: WO 2023/013907

(56) References cited:
- EP-B1- 1 889 349
- WO-A1-2020/121337
- JP-A- 2004 320 840
- KR-A- 20140 080 014
- KR-A- 20180 006 186
- KR-A- 20180 037 762
- KR-A- 20210 029 895
- US-A1- 2011 037 320
- US-A1- 2013 181 516
- US-A1- 2013 307 489
- US-A1- 2018 093 582
- US-B2- 8 143 855

## Description

### [Technical Field]

### TECHNICAL FIELD

Embodiments disclosed herein relate to a battery control apparatus, an operating method thereof, and a battery control system.

### [Background Art]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

Mobility collectively refers to means of transportation with mobility. For a battery used in mobility, it is essential to manage the degradation degree of the battery in order to increase the lifespan of the battery. Since air mobility operates in the sky, it may not be able to stop unlike mobility that is driven on the ground, such that problems may occur in case of emergency. US8143855 B2, US2013/307489 A1, KR 2021 0029895 A, US2018/093582 A1, EP1889349 B1, US2011/037320 A1 and JP 2004 320840 A each relate to apparatus for controlling main and auxiliary batteries.

### [Disclosure]

### [Technical Problem]

Embodiments disclosed herein aim to provide a battery control apparatus, an operating method thereof, and a battery control system to efficiently control an operation of a battery provided in mobility.

Technical problems of the embodiments disclosed herein are not limited to the above-described technical problems, and other unmentioned technical problems would be clearly understood by one of ordinary skill in the art from the following description.

### [Technical Solution]

A battery control apparatus according to claim 1 is provided in a first aspect disclosed herein.

In an embodiment, the controller may be further configured to generate a control signal for controlling the second battery to assist power supply of the first battery by charging or discharging the second battery based on a speed or instantaneous speed of the mobility.

In an embodiment, the controller may be further configured to generate a control signal for controlling to perform balancing between the second batteries when a deviation in state of charge (SOC) or state of health (SOH) between the second batteries is greater than or equal to a reference value.

In an embodiment, the controller may be further configured to, when abnormality occurs in at least one of the second batteries, generate a control signal for controlling the operations of the first battery and the second battery to perform an emergency driving mode of the mobility based on the operation of the first battery and operations of the second batteries other than the second battery having abnormality.

In an embodiment, the controller may be further configured to, when a number of second batteries having abnormality among the second batteries is greater than or equal to a preset value, generate a control signal for controlling the operations of the first battery and the second battery to perform the emergency driving mode of the mobility based on the operation of the first battery.

In an embodiment, the controller may be further configured to, when abnormality occurs in the first battery, generate a control signal for controlling the operations of the first battery and the second battery to perform the emergency driving mode of the mobility based on the operation of the second battery.

An operating method of a battery control apparatus according to claim 7 is provided in a second aspect.

In an embodiment, the generating of the control signal for controlling the operations of the first battery and the second battery, based on the obtained information, may include generating a control signal for controlling the second battery to assist power supply of the first battery by charging or discharging the second battery based on a speed or instantaneous speed of the mobility.

In an embodiment, a plurality of second batteries may be provided, and the generating of the control signal for controlling the operations of the first battery and the second battery, based on the obtained information, may include determining whether a deviation in state of charge (SOC) or state of health (SOH) between the second batteries is greater than or equal to a reference value and generating a control signal for controlling to perform balancing between the second batteries.

In an embodiment, the generating of the control signal for controlling the operations of the first battery and the second battery, based on the obtained information, may include determining whether abnormality occurs in at least one of the second batteries and generating a control signal for controlling the operations of the first battery and the second battery to perform an emergency driving mode of the mobility based on the operation of the first battery and operations of the second batteries other than the second battery having abnormality.

In an embodiment, the generating of the control signal for controlling the operations of the first battery and the second battery, based on the obtained information may include determining whether a number of second batteries having abnormality among the second batteries is greater than or equal to a preset value and generating a control signal for controlling the operations of the first battery and the second battery to perform the emergency driving mode of the mobility based on the operation of the first battery.

In an embodiment, the generating of the control signal for controlling the operations of the first battery and the second battery, based on the obtained information may include determining whether abnormality occurs in the first battery and generating a control signal for controlling the operations of the first battery and the second battery to perform the emergency driving mode of the mobility based on the operation of the second battery.

A battery control system according to claim 13 is provided in a third aspect.

In an embodiment, the control apparatus is further configured to control to assist power supply of the first battery by charging or discharging the second battery based on a speed or instantaneous speed of the mobility.

In an embodiment, a plurality of second batteries may be provided, and the control apparatus may be further configured to control to perform balancing between the second batteries when a deviation in state of charge (SOC) or state of health (SOH) between the second batteries is greater than or equal to a reference value.

In an embodiment, a plurality of second batteries may be provided, and the control apparatus may be further configured to, when abnormality occurs in at least one of the second batteries, perform an emergency driving mode of the mobility based on the operation of the first battery and operations of second batteries other than the second battery having abnormality.

In an embodiment, the control apparatus may be further configured to, when a number of second batteries having abnormality among the second batteries is greater than or equal to a preset value, perform the emergency driving mode of the mobility based on the operation of the first battery.

In an embodiment, a plurality of second batteries may be provided, and the control apparatus may be further configured to, when abnormality occurs in the first battery, perform the emergency driving mode of the mobility based on the operation of the second battery.

### [Advantageous Effects]

A battery control apparatus according to an embodiment disclosed herein may manage a degradation degree of a battery included in mobility, by controlling an operation of the battery based on information regarding the mobility and information regarding the battery.

The battery control apparatus according to an embodiment disclosed herein may allow mobility to efficiently reach a target speed or an instantaneous speed, by controlling an operation of a battery included in the mobility based on information regarding the mobility and information regarding the battery.

The battery control apparatus according to an embodiment disclosed herein may enable an emergency driving mode to operate in case of abnormality occurring in a battery included in mobility, by controlling an operation of the battery based on information regarding the mobility and information regarding the battery.

Moreover, various effects recognized directly or indirectly from the disclosure may be provided.

### [Description of Drawings]

FIG. 1 illustrates mobility according to an embodiment disclosed herein.
FIG. 2 is a block diagram of a battery control system according to an embodiment disclosed herein.
FIG. 3 illustrates a battery control apparatus according to an embodiment disclosed herein.
FIG. 4 shows an example where a battery control apparatus according to an embodiment disclosed herein controls a battery based on a speed of mobility.
FIGS. 5 and 6 show an example where a battery control apparatus according to an embodiment disclosed herein controls a battery based on an instantaneous speed of mobility.
FIG. 7 is a flowchart of an operating method of a battery control apparatus according to an embodiment disclosed herein.
FIGS. 8 to 10 further illustrate an operating method of a battery control apparatus according to an embodiment disclosed herein.

### [Mode for Invention]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present application.

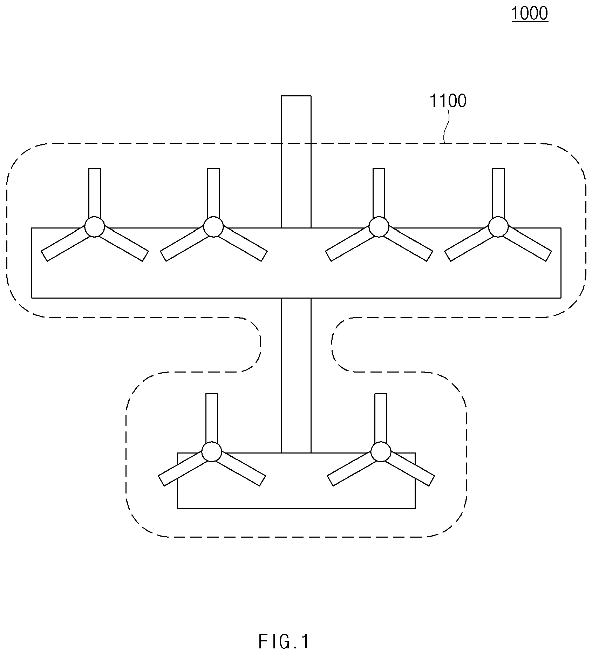

FIG. 1 illustrates mobility according to an embodiment disclosed herein.

Referring to FIG. 1, mobility 1000 may refer to means with mobility. For example, the mobility 1000 may include at least any one of a vehicle, an electric quick board, an airplane, a drone, a helicopter, a train, a bicycle, or a motorcycle. In another example, the mobility 1000 may include means capable of having mobility through at least one energy of electricity, hydrogen, or fuel. Although the mobility 1000 is illustrated in the shape of an airplane in FIG. 1, the present disclosure is not limited thereto.

The mobility 1000 may include a module 1100. For example, the mobility 1000 may include a plurality of modules 1100. Although the module 1100 is illustrated in the shape of a propeller in FIG. 1, the present disclosure is not limited thereto. That is, the module may include a device driven using energy to enable the mobility 1000 to move.

The mobility 1000 may be driven through a battery. For example, each module 1100 may include a battery and may be driven based on energy of the included battery. In another example, the mobility 1000 may include a battery capable of supplying energy to the mobility 1000 and the module 1100. The mobility 1000 may include a battery control apparatus capable of controlling an operation of the battery to efficiently manage and use (charge or discharge) the battery.

The mobility 1000 according to an embodiment disclosed herein may control an operation of the battery through the battery control apparatus such that each module 1100 and the mobility 1000 may be efficiently driven.

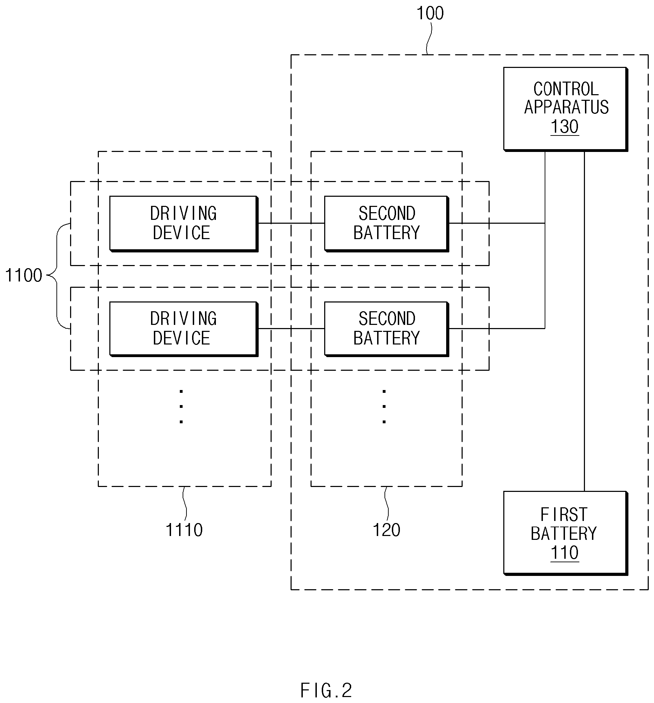

FIG. 2 is a block diagram of a battery control system according to an embodiment disclosed herein.

Referring to FIG. 2, a battery control system 100 according to the invention includes a first battery 110, a second battery 120, and a control apparatus 130. The module 1100 may be substantially the same as the module 1100 of FIG. 1. In an embodiment, each module 1100 may include a driving device 1110 and the second battery 120. For example, the driving device 1110 may include a motor (not shown) and an inverter (not shown). In another example, the driving device 1110 may be provided with power of the first battery 110 and power of the second battery 120 in parallel.

The first battery 110 supplies power to each module 1100 included in mobility. The first battery 110, which is a base battery, supplies power to every modules 1100 included in the mobility. The first battery 110 may be, for example, a lithium ion (Li-ion) battery, an Li-ion polymer battery, a nickel-cadmium (Ni-Cd) battery, a nickel hydrogen (Ni-MH) battery, etc., and are not limited thereto. In an embodiment, the first battery 110 may include at least any one of a plurality of battery cells (not shown), a plurality of battery modules (not shown), or a plurality of battery packs (not shown).

The second battery 120 is provided in each module 1100. Each module 1100 includes the second battery 120. The second battery 120 may be, for example, an Li-ion battery, an Li-ion polymer battery, an Ni-Cd battery, an Ni-MH battery, etc., and are not limited thereto.

The second battery 120 as an auxiliary power source for the first battery 110 supplies power to the module 1100 based on an operation of the mobility. For example, the second battery 120 may supply power to each module 1100 when additional charging or discharging of power as well as power supplied to the module 1110 from the first battery 110 is required. In an embodiment, the second battery 120 included in each module 1100 may supply power of a different magnitude to the module 1100 connected thereto. The number of second batteries 120 is plural and may be equal to the number of modules 1100.

The control apparatus 130 controls operations of the first battery 110 and the second battery 120. The control apparatus 130 obtains information regarding the first battery 110, the second battery 120, and mobility, and control operations of the first battery 110 and the second battery 120 based on the obtained information. In an embodiment, the control apparatus 130 may be supplied with power from the first battery 110. In an embodiment, the control apparatus 130 may control outputs (power supply) of the first battery 110 and the second battery 120.

The control apparatus 130 controls to assist power supply (outputs, operations) of the first battery 110 by charging or discharging the second battery 120 based on a speed or an instantaneous speed of the mobility. For example, when a target speed of the mobility to be reached is higher than a maximum speed obtainable by supplying power to the module 1100 from the first battery 110, the control apparatus 130 may control outputs of the first battery 110 and the second battery 120 in such a way to enable the mobility to reach the target speed by controlling the second battery 120 to be discharged to. In another example, when the instantaneous speed of the mobility has to be lowered, the control apparatus 130 may first reduce the speed of the driving device 1110 included in the module 1100 by controlling the second battery 120 to recover (charge) power from the module 1100 and then control the outputs of the first battery 110 and the second battery 120 to enable the mobility to quickly reach the target speed by controlling the output of the first battery 110 to be lowered. In another example, when the instantaneous speed of the mobility has to be increased, the control apparatus 130 may first reduce the speed of the driving device 1110 included in the module 1100 by controlling the second battery 120 to supply (discharge) power and then control the operations of the first battery 110 and the second battery 120 to enable the mobility to quickly reach the target speed by controlling the output of the first battery 110 to be increased.

The control apparatus 130 may perform balancing between the second batteries 120 when a deviation in state of charge (SOC) or state of health (SOH) between the second batteries 120 is greater than or equal to a reference value. For example, when any one of the second batteries has an SOC or an SOH that is different from that of another second battery by a reference value or more, the control apparatus 130 may control the operation of the second battery 120 to balance SOCs and SOHs of the second batteries 120 while performing normal driving of the mobility by additionally using a driving device connected to the module corresponding to the other second battery. That is, the control apparatus 130 may control the operation of the second battery 120 such that the degradation degree differs between the second batteries 120 by the reference value or less.

When abnormality occurs in at least one of the second batteries 120, the control apparatus 130 may perform an emergency driving mode of the mobility based on operations of the other second batteries except for the first battery 110 and the second battery having abnormality. For example, when driving is possible at the target speed merely with outputs of the first battery and the other second batteries than the second battery having abnormality, the control apparatus 130 may power off the driving device connected to the second battery having abnormality to perform emergency driving. That is, the emergency driving mode may be a mode to power off the driving device connected to the second battery having abnormality when driving of the mobility is possible at an existing speed.

When the number of second batteries having abnormality among the second batteries is greater than or equal to a preset value, the control apparatus 130 may perform the emergency driving mode of the mobility based on the operation of the first battery. For example, the control apparatus 130 may set the preset value based on the target speed of the mobility, and when the driving of the mobility is not possible at the target speed because the number of second batteries having abnormality among the second batteries is greater than or equal to the preset value, then the control apparatus 130 may control to drive the mobility merely using the first battery 110. That is, the control apparatus 130 may power off the driving devices connected to all second batteries and may control to drive the mobility merely with the output of the first battery 110. In an embodiment, the control apparatus 130 may perform the emergency driving mode of the mobility based on position information of the second battery having abnormality among the second batteries.

When abnormality occurs in the first battery 110, the control apparatus 130 may perform the emergency driving mode of the mobility based on the operation of the second battery 120. For example, when the control apparatus 130 determines that abnormality occurs in the first battery 110, the control apparatus 130 may stop using the first battery 110 and continuously operate by receiving power from any one of the second batteries, and may control to drive the mobility based on the operation of the second battery 120.

The battery control system 100 according to an embodiment disclosed herein may control the mobility to reach the target speed or target instantaneous speed by controlling the operations of the first battery 110 and the second battery 120 through the control apparatus 130, may balance the degradation degrees of the second batteries 120, and may perform the emergency driving mode in case of emergency of the mobility.

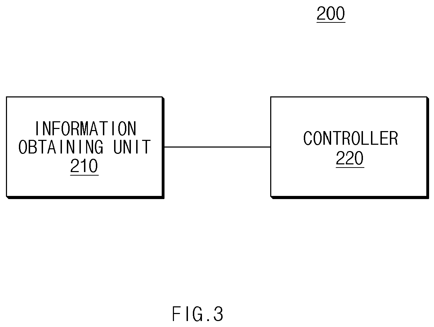

FIG. 3 illustrates a battery control apparatus according to the invention.

Referring to FIG. 3, a battery control apparatus 200 includes an information obtaining unit 210 and a controller 220. In an embodiment, the battery control apparatus 200 may be substantially the same as the control apparatus 130 of FIG. 2.

The information obtaining unit 210 obtains information about mobility. For example, the information obtaining unit 210 may obtain at least any one of a target speed, a target instantaneous speed, a current speed, a maximum speed, or a minimum speed of the mobility.

The information obtaining unit 210 obtains information about a first battery that supplies power to each module included in the mobility. For example, the first battery may be substantially the same as the first battery 110 of FIG. 2. In another example, the information about the first battery may include at least any one of a voltage, a current, a temperature, an insulating resistance, an SOC, an SOH, or a failure of the first battery.

The information obtaining unit 210 obtains information about a second battery that supplies power to each module as an auxiliary power source for the first battery based on the operation of the mobility. For example, the second battery may be substantially the same as the second battery 120 of FIG. 2. In another example, the information about the second battery may include at least any one of a voltage, a current, a temperature, an insulating resistance, an SOC, an SOH, or a failure of the second battery.

The controller 220 generates a control signal for controlling the operations of the first battery and the second battery, based on the obtained information. For example, the controller 220 may control the mobility to be driven normally by generating the control signal for controlling the operations of the first battery and the second battery based on information about the mobility, the first battery, and the second battery.

The controller 220 may generate a control signal for controlling the second battery to assist the output of the first battery by charging or discharging the second battery based on the speed or instantaneous speed of the mobility. For example, the controller 220 may generate a control signal for controlling the second battery to assist power supply (output) of the first battery by additionally supplying power of the second battery to the module based on the target speed or target instantaneous speed of the mobility or using the power supplied to the module by the second battery.

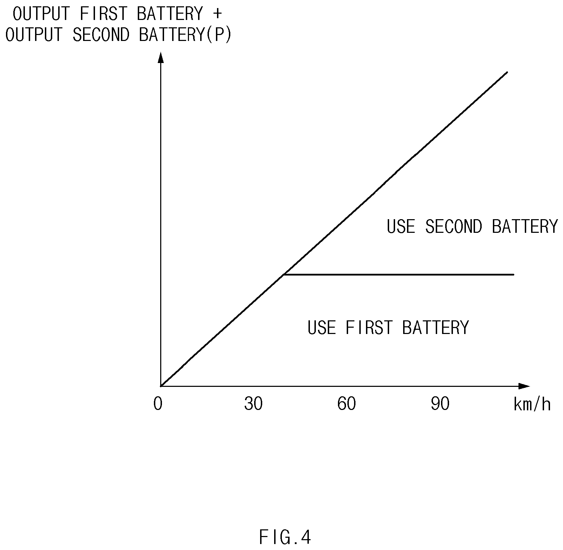

FIG. 4 shows an example where a battery control apparatus according to an embodiment disclosed herein controls a battery based on a speed of mobility.

Referring to FIG. 4, when a speed that may not be reached with the output of the first battery is the target speed of the mobility, the controller 220 may generate a control signal for controlling the operation of the second battery to allow the mobility to reach the target speed by additionally supplying the output of the second battery to the module.

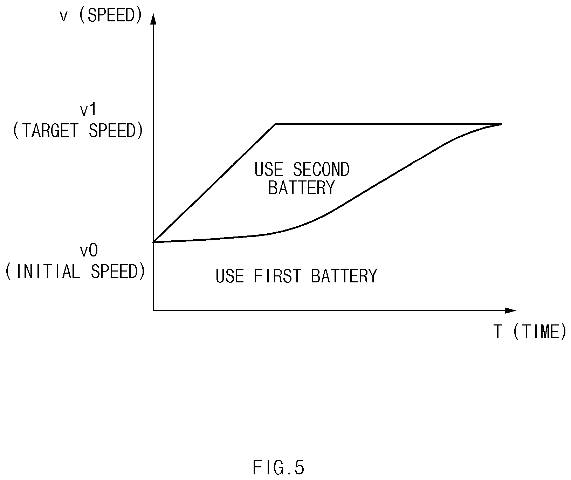

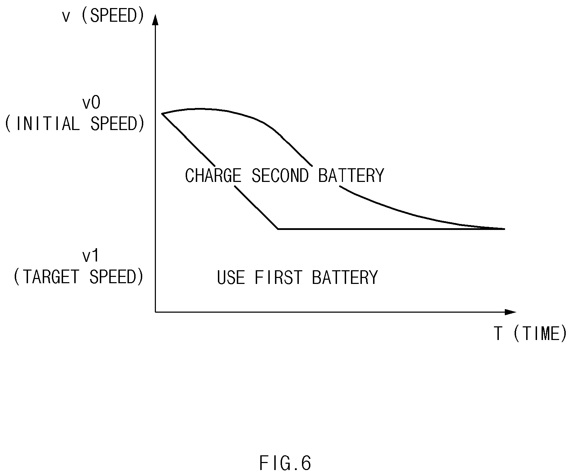

FIGS. 5 and 6 show an example where a battery control apparatus according to an embodiment disclosed herein controls a battery based on an instantaneous speed of mobility.

Referring to FIG. 5, in order for the mobility to quickly reach a target speed v1 from an initial speed v0, the controller 220 may generate a control signal for controlling the instantaneous speed to be increased by additionally supplying (discharging the second battery) the output of the second battery to the module to assist the output of the first battery. The controller 220 may generate a control signal for controlling the outputs of the first battery and the second battery to gradually reduce the use of the second battery by increasing the output of the first battery while causing the mobility to reach the target speed v1 by increasing the output of the second battery. That is, the controller 220 may discharge the second battery to quickly reach the target speed v1 of the mobility, and may generate a control signal for controlling a discharging operation of the second battery to be stopped when the target speed v1 of the mobility is maintained merely with the output of the first battery.

Referring to FIG. 6, in order for the mobility to quickly reach the target speed v1 from the initial speed v0, the controller 220 may generate a control signal for controlling the instantaneous speed to be reduced by charging the second battery based on a voltage supplied to the module to assist the power supply (output) of the first battery. The controller 220 may generate a control signal for controlling the operations of the first battery and the second battery to gradually reduce the charging of the second battery by reducing the output of the first battery while causing the mobility to reach the target speed v1 by charging the second battery. That is, the controller 220 may charge the second battery to quickly reach the target speed v1 of the mobility, and may generate a control signal for controlling a power recovery operation of the second battery to be stopped when the target speed v1 of the mobility is maintained merely with the output of the first battery.

Referring back to FIG. 3, the controller 220 may generate a control signal for controlling to perform balancing between the second batteries, when an SOC or SOH deviation between the second batteries is greater than or equal to the reference value. For example, the controller 220 may determine whether a deviation in SOC or SOH of each second battery, obtained in the information obtaining unit 210, is greater than or equal to the reference value, and determine a second battery having a deviation greater than or equal to the reference value. By controlling a control signal for increasing the outputs of the other second batteries than the second battery having the deviation greater than or equal to the reference value, the controller 220 may control the mobility to be driven normally by additionally using a module including the other second batteries, and perform balancing between the second batteries.

When abnormality occurs in at least one of the second batteries, the control apparatus 220 may generate a control signal for controlling the operations of the first battery and the second battery to perform the emergency driving mode of the mobility based on the operation of the first battery and the operations of the other second batteries than the second battery having abnormality. For example, the controller 220 may determine whether abnormality occurs in at least one of the second batteries and identify the second battery having abnormality. When it is possible to drive the mobility at an existing target speed based on the outputs of the first battery and the other second batteries than the second battery having abnormality, the controller 220 may generate a control signal for controlling the operations of the first battery and the second batteries to stop using the second battery having abnormality and to allow the mobility to perform emergency driving based on the outputs of the first battery and the other second batteries than the second battery having abnormality.

When the number of second batteries having abnormality among the second batteries is greater than or equal to a preset value, the controller 220 may generate a control signal for controlling the operation of the first battery to perform the emergency driving mode of the mobility based on the output of the first battery. For example, when the number of second batteries having abnormality is greater than or equal to the preset value and thus it is difficult to drive the mobility at an existing driving speed with the outputs of the first battery and the second batteries having no abnormality, then the controller 220 may generate a control signal for controlling the operations of the first battery and the second battery to stop using the second battery and to perform emergency driving on the mobility merely with the output of the first battery.

When abnormality occurs in the first battery, the controller 220 may generate a control signal for controlling the operations of the first battery and the second battery to perform the emergency driving mode of the mobility based on the operation of the second battery. For example, when abnormality occurs in the first battery, the controller 220 may operate by being supplied with power of any one of the second batteries, and generate a control signal for controlling the operations of the first battery and the second battery to stop using the first battery and to perform emergency driving on the mobility merely with the output of the second battery.

In the battery control apparatus 200 according to an embodiment disclosed herein, the controller 220 may generate a control signal for controlling the operations of the first battery and the second battery based on the information obtained in the information obtaining unit 210, thus allowing the mobility to reach the target speed and the target instantaneous speed, matching the degree of degradation between the second batteries, and performing the emergency driving mode on the mobility. That is, the battery control apparatus 200 may efficiently perform the driving of the mobility and the use of the battery by controlling the operations of the first battery and the second battery.

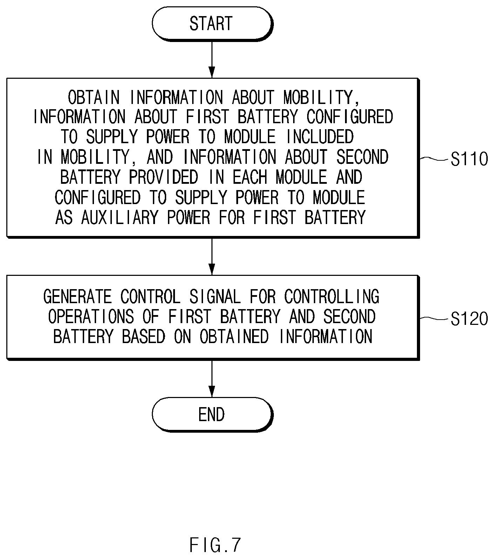

FIG. 7 is a flowchart of an operating method of a battery control apparatus according to an embodiment disclosed herein.

Referring to FIG. 7, an operating method of the battery control apparatus 200 according to the invention includes operation S110 of obtaining information about mobility, information about a first battery configured to supply power to each module included in the mobility, and information about a second battery provided in each module and configured to supply power to the module as an auxiliary power source for the second battery based on an operation of the mobility, and operation S120 of generating a control signal for controlling operations of the first battery and the second battery based on the obtained information.

In operation S110 of obtaining the information about the mobility, the information about the first battery configured to supply power to each module included in the mobility, and the information about the second battery provided in each module and configured to supply power to the module as the auxiliary power source for the second battery based on the operation of the mobility, the information obtaining unit 210 obtains the information about the mobility, the information about the first battery, and the information about the second battery. For example, the information about the mobility may include at least any one of a target speed, a target instantaneous speed, a current speed, a maximum speed, or a minimum speed of the mobility. In another example, each of the information about the first battery and the information about the second battery may include at least any one of a voltage, a current, a temperature, an insulating resistance, an SOC, an SOH, or a failure of the first battery and the second battery.

In operation S120 of generating the control signal for controlling the operations of the first battery and the second battery based on the obtained information, the controller 220 controls the operations of the first battery and the second battery based on the information about the mobility, the information about the first battery, and the information about the second battery, obtained from the information obtaining unit 210. For example, in operation S120, the controller 220 may generate a control signal for controlling the second battery to assist the power supply (output) of the first battery by charging or discharging the second battery based on the speed or instantaneous speed of the mobility.

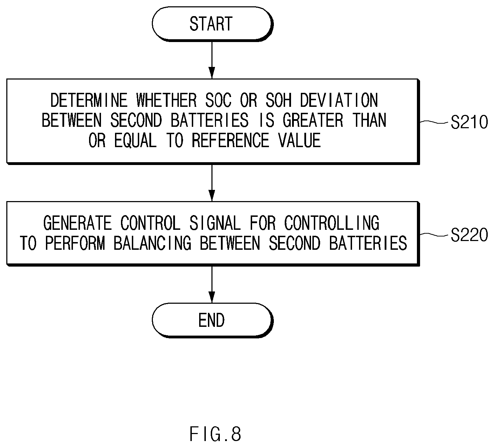

FIGS. 8 to 10 further illustrate an operating method of a battery control apparatus according to an embodiment disclosed herein.

Referring to FIG. 8, an operating method of the battery control apparatus 200 according to an embodiment disclosed herein may include operation S210 of determining whether an SOC or SOH deviation between second batteries is greater than or equal to a reference value and operation S220 of generating a control signal for controlling to perform balancing between the second batteries. In an embodiment, operations S210 and S220 may be included in operation S120 of FIG. 7.

In operation S210 of determining whether the SOC or SOH deviation between the second batteries is greater than or equal to the reference value, the controller 220 may determine whether the SOC or SOH deviation between the second batteries is greater than or equal to the reference value. For example, the controller 220 may identify a second battery having an SOC or SOH deviation being greater than or equal to the reference value.

In operation S220 of generating the control signal for controlling to perform balancing between the second batteries, the controller 220 may generate the control signal for controlling to perform balancing between the second batteries. For example, the controller 220 may match the degrees of degradation between the second batteries by increasing the outputs of the other second batteries than the second battery having the SOC or SOH deviation being greater than or equal to the reference value.

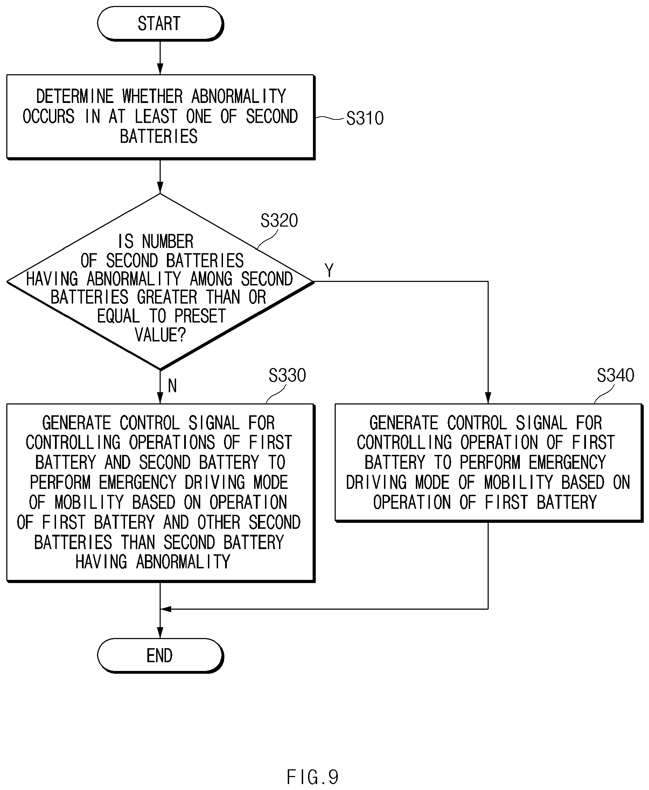

Referring to FIG. 9, an operating method of the battery control apparatus 200 according to an embodiment disclosed herein may include operation S310 of determining whether abnormality occurs in at least one of second batteries, operation S320 of determining whether the number of second batteries having abnormality among the second batteries is greater than or equal to a preset value, operation S330 of generating a control signal for controlling operations of the first battery and the second battery to perform an emergency driving mode of mobility based on the operation of the first battery and the operations of the other second batteries than the second battery, and operation S340 of generating a control signal for controlling the operation of the first battery to perform the emergency driving mode of the mobility based on the operation of the first battery. In an embodiment, operations S310 and S330 may be included in operation S120 of FIG. 7. In another embodiment, operation S120 of FIG. 7 may further include operations S320 and S340.

In operation S310 of determining whether abnormality occurs in at least one of the second batteries, the controller 220 may determine whether abnormality occurs in at least one of the second batteries. For example, the controller 220 may determine whether abnormality occurs in at least one of the second batteries based on failure information or a specific physical quantity obtained in the information obtaining unit 210.

In operation S320 of determining whether the number of second batteries having abnormality is greater than or equal to the preset value, the controller 220 may set the preset value based on a target speed of the mobility and determine whether the number of second batteries having abnormality among the second batteries is greater than or equal to the preset value. The controller 220 may perform operation S340 when the number of second batteries having abnormality is greater than or equal to the preset value, and perform operation S330 when the number of second batteries having abnormality is less than the preset value.

In operation S330 of generating the control signal for controlling the operations of the first battery and the second battery to perform the emergency driving mode of the mobility based on the operation of the first battery and the operations of the other second batteries than the second battery having abnormality, the controller 220 may generate the control signal for controlling the operations of the first battery and the second battery to perform the emergency driving mode of the mobility based on the operations of the other second batteries than the second battery having abnormality and the operation of the first battery. For example, the target speed of the mobility may be reached based on the output of the first battery and the outputs of the other second batteries than the second battery having abnormality, and thus the controller 220 may perform emergency driving on the mobility by generating the control signal for stopping using the second battery having abnormality and controlling the operation of the first battery and the operations of the other second batteries.

In operation S340 of generating the control signal for controlling the operations of the first battery and the second battery to perform the emergency driving mode of the mobility based on the operation of the first battery, the controller 220 may generate the control signal for controlling the operations of the first battery and the second battery to perform the emergency driving mode of the mobility based on the output of the first battery. For example, the target speed of the mobility may not be reached based on the output of the first battery and the outputs of the other second batteries than the second battery having abnormality, and thus the controller 220 may generate the control signal for stopping using all of the second batteries and controlling the mobility to be driven merely with the output of the first battery.

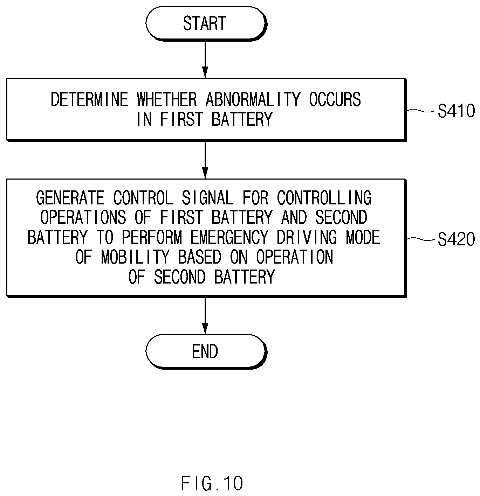

Referring to FIG. 10, the operating method of the battery control apparatus 200 according to an embodiment disclosed herein may include operation S410 of determining whether abnormality occurs in the first battery and operation S420 of generating a control signal for controlling the operations of the first battery and the second battery to perform the emergency driving mode of the mobility based on the operation of the second battery. In an embodiment, operations S410 and S420 may be included in operation S120 of FIG. 7.

In operation S410 of determining whether abnormality occurs in the first battery, the controller 220 may determine whether abnormality occurs in the first battery based on information obtained in the information obtaining unit 210. For example, when abnormality occurs in the first battery, the controller 220 may generate the control signal for controlling the operations of the first battery and the second battery to allow the mobility to be driven normally.

**In** operation S420 of generating the control signal for controlling the operations of the first battery and the second battery to perform the emergency driving mode of the mobility based on the operation of the first battery, due to a situation where the controller 220 is not able to use the output of the first battery, the controller 220 may generate the control signal for being supplied with power from any one of the second batteries, stopping using the first battery, and controlling the operations of the first battery and the second battery to perform the driving of the mobility based on the output of the second battery.

## Claims

1. A battery control apparatus (200) comprising:
an information obtaining unit (210) configured to obtain information about a means of transport, information about a first battery configured to supply power to a plurality of modules included in the means of transport, and information about a plurality of second batteries, one of which being provided in each module and configured to supply power to each module as an auxiliary power source for the first battery based on an operation of the means of transport; and
a controller (220) configured to generate a control signal for controlling an operation of the first battery and an operation of each second battery based on the information about the means of transport, the information about the first battery, and the information about the each second battery,
wherein the controller (220) is further configured to generate a control signal for controlling discharging of each of the plurality of second batteries based on a speed of the means of transport.

2. The battery control apparatus (200) of claim 1, wherein the controller (220) is further configured to generate a control signal for controlling the plurality of second batteries to assist power supply of the first battery by charging or discharging each of the plurality of second batteries based on a speed of the means of transport.

3. The battery control apparatus (200) of claim 1, wherein
the controller (220) is further configured to generate a control signal for controlling to perform balancing between the second batteries when a deviation in state of charge, SOC, or state of health, SOH, between the second batteries is greater than or equal to a reference value.

4. The battery control apparatus (200) of claim 1, wherein
the controller (220) is further configured to, when abnormality occurs in at least one of the second batteries, generate a control signal for controlling the operations of the first battery and the second battery to perform an emergency driving mode of the means of transport based on the operation of the first battery and operations of the second batteries other than the second battery having abnormality.

5. The battery control apparatus (200) of claim 4, wherein the controller (220) is further configured to, when a number of second batteries having abnormality among the second batteries is greater than or equal to a preset value, generate a control signal for controlling the operations of the first battery and the second battery to perform the emergency driving mode of the means of transport based on the operation of the first battery.

6. The battery control apparatus (200) of claim 1, wherein the controller (220) is further configured to, when abnormality occurs in the first battery, generate a control signal for controlling the operations of the first battery and the each of the plurality of second batteries to perform the emergency driving mode of the means of transport based on the operation of each second battery.

7. An operating method of a battery control apparatus (200), the operating method comprising:
obtaining, via an information obtaining unit (210) configured to obtain information about a means of transport, information about a first battery configured to supply power to a plurality of modules included in the means of transport, and information about a plurality of second batteries, one of which being provided in each module and configured to supply power to each module as an auxiliary power source for the first battery based on an operation of the means of transport; and
generating a control signal for controlling an operation of the first battery and an operation of each second battery based on the information about the means of transport, the information about the first battery, and the information about each second battery,
wherein generating a control signal for controlling an operation of the first battery and an operation of the second battery based on the information about the means of transport, the information about the first battery, and the information about the second battery comprises:
generating a control signal for controlling a charging and discharging of each of the plurality of second batteries based on a speed of the means of transport.

8. The operating method of claim 7, wherein the generating of the control signal for controlling the operations of the first battery and each second battery, based on the obtained information comprises generating a control signal for controlling each second battery to assist power supply of the first battery by charging or discharging each second battery based on a speed of the means of transport.

9. The operating method of claim 7, wherein
the generating of the control signal for controlling the operations of the first battery and each second battery, based on the obtained information comprises:
determining whether a deviation in state of charge, SOC, or state of health, SOH, between the second batteries is greater than or equal to a reference value; and
generating a control signal for controlling to perform balancing between the second batteries.

10. The operating method of claim 7, wherein
the generating of the control signal for controlling the operations of the first battery and each second battery, based on the obtained information comprises:
determining whether abnormality occurs in at least one of the second batteries; and
generating a control signal for controlling the operations of the first battery and each second battery to perform an emergency driving mode of the mobility based on the operation of the first battery and operations of each second battery other than the second battery having abnormality.

11. The operating method of claim 10, wherein the generating of the control signal for controlling the operations of the first battery and the second battery, based on the obtained information further comprises:
determining whether a number of second batteries having abnormality among the second batteries is greater than or equal to a preset value; and
generating a control signal for controlling the operations of the first battery and the second battery to perform the emergency driving mode of the mobility based on the operation of the first battery.

12. The operating method of claim 7, wherein the generating of the control signal for controlling the operations of the first battery and each second battery, based on the obtained information comprises:
determining whether abnormality occurs in the first battery; and
generating a control signal for controlling the operations of the first battery and each second battery to perform the emergency driving mode of the means of transport based on the operation of each second battery.

13. A battery control system comprising:
a first battery configured to supply power to a plurality of modules included in a means of transport with mobility;
a plurality of second battery provided in each module and configured to supply power to the module as an auxiliary power source for the first battery based on an operation of the means of transport; and
a control apparatus according to any of claims 1 to 6.

14. The battery control system of claim 13, wherein the control apparatus is further configured to control to assist power supply of the first battery by charging or discharging each second battery based on a speed of the means of transport.

15. The battery control system of claim 13, wherein the control apparatus is further configured to control to perform balancing between the second batteries when a deviation in state of charge, SOC, or state of health, SOH, between the second batteries is greater than or equal to a reference value.

## Patentansprüche

1. Batteriesteuerungsvorrichtung (200), umfassend:
eine Information-Erlangungseinheit (210), welche dazu eingerichtet ist, eine Information über ein Transportmittel, eine Information über eine erste Batterie, welche dazu eingerichtet ist, eine Mehrzahl von Modulen, welche in dem Transportmittel umfasst sind, mit Energie zu versorgen, und eine Information über eine Mehrzahl zweiter Batterien zu erlangen, von welchen eine in jedem Modul bereitgestellt ist und dazu eingerichtet ist, auf Grundlage einer Betätigung des Transportmittels jedes Modul als eine Hilfsenergiequelle für die erste Batterie mit Energie zu versorgen; und
eine Steuereinheit (220), welche dazu eingerichtet ist, auf Grundlage der Information über das Transportmittel, der Information über die erste Batterie und der Information über jede zweite Batterie ein Steuersignal zum Steuern einer Betätigung der ersten Batterie und einer Betätigung jeder zweiten Batterie zu erzeugen,
wobei die Steuereinheit (220) ferner dazu eingerichtet ist, auf Grundlage einer Geschwindigkeit des Transportmittels ein Steuersignal zum Steuern eines Entladens jeder aus der Mehrzahl zweiter Batterien zu erzeugen.

2. Batteriesteuerungsvorrichtung (200) nach Anspruch 1, wobei die Steuereinheit (220) ferner dazu eingerichtet ist, ein Steuersignal zum Steuern der Mehrzahl zweiter Batterien zu erzeugen, um auf Grundlage einer Geschwindigkeit des Transportmittels eine Energieversorgung der ersten Batterie durch Laden oder Entladen jeder aus der Mehrzahl zweiter Batterien zu unterstützen.

3. Batteriesteuerungsvorrichtung (200) nach Anspruch 1, wobei
die Steuereinheit (220) ferner dazu eingerichtet ist, ein Steuersignal zum Steuern einer Durchführung eines Ausgleichens zwischen den zweiten Batterien zu erzeugen, wenn eine Abweichung in einem Ladezustand, SOC, oder einem Gesundheitszustand, SOH, zwischen den zweiten Batterien größer als oder gleich wie ein Referenzwert ist.

4. Batteriesteuerungsvorrichtung (200) nach Anspruch 1, wobei
die Steuereinheit (220) ferner dazu eingerichtet ist, wenn in wenigstens einer der zweiten Batterien eine Anomalie auftritt, ein Steuersignal zum Steuern der Betätigungen der ersten Batterie und der zweiten Batterie zu erzeugen, um auf Grundlage der Betätigung der ersten Batterie und Betätigungen der zu der Anomalie-aufweisenden zweiten Batterie anderen zweiten Batterien einen Notfall-Fahrmodus der Transportmittel durchzuführen.

5. Batteriesteuerungsvorrichtung (200) nach Anspruch 4, wobei
die Steuereinheit (220) ferner dazu eingerichtet ist, wenn eine Anzahl Anomalie-aufweisender zweiter Batterien unter den zweiten Batterien größer als oder gleich wie ein vorfestgelegter Wert ist, ein Steuersignal zum Steuern der Betätigungen der ersten Batterie und der zweiten Batterie zu erzeugen, um auf Grundlage der Betätigung der ersten Batterie den Notfall-Fahrmodus des Transportmittels durchzuführen.

6. Batteriesteuerungsvorrichtung (200) nach Anspruch 1, wobei die Steuereinheit (220) ferner dazu eingerichtet ist, wenn eine Anomalie in der ersten Batterie auftritt, ein Steuersignal zum Steuern der Betätigungen der ersten Batterie und jeder der Mehrzahl zweiter Batterien zu erzeugen, um auf Grundlage der Betätigung jeder zweiten Batterie den Notfall-Fahrmodus des Transportmittels durchzuführen.

7. Betätigungsverfahren einer Batteriesteuerungsvorrichtung (200), wobei das Betätigungsverfahren umfasst:
Erlangen, mittels einer Information-Erlangungseinheit (210), welche dazu eingerichtet ist, eine Information über ein Transportmittel zu erlangen, einer Information über eine erste Batterie, welche dazu eingerichtet ist, eine Mehrzahl von Modulen, welche in dem Transportmittel umfasst sind, mit Energie zu versorgen, und einer Information über eine Mehrzahl zweiter Batterien, von welchen eine in jedem Modul bereitgestellt ist und dazu eingerichtet ist, auf Grundlage einer Betätigung des Transportmittels jedes Modul als eine Hilfsenergiequelle für die erste Batterie mit Energie zu versorgen; und
Erzeugen eines Steuersignals zum Steuern einer Betätigung der ersten Batterie und einer Betätigung jeder zweiten Batterie auf Grundlage der Information über das Transportmittel, der Information über die erste Batterie und der Information über jede zweite Batterie,
wobei ein Erzeugen eines Steuersignals zum Steuern einer Betätigung der ersten Batterie und einer Betätigung der zweiten Batterie auf Grundlage der Information über das Transportmittel, der Information über die erste Batterie und der Information über die zweite Batterie umfasst:
Erzeugen eines Steuersignals zum Steuern eines Ladens und Entladens jeder aus der Mehrzahl zweiter Batterien auf Grundlage einer Geschwindigkeit des Transportmittels.

8. Betätigungsverfahren nach Anspruch 7, wobei das Erzeugen des Steuersignals zum Steuern der Betätigungen der ersten Batterie und jeder zweiten Batterie auf Grundlage der erlangten Information ein Erzeugen eines Steuersignals zum Steuern jeder zweiten Batterie umfasst, um auf Grundlage einer Geschwindigkeit des Transportmittels eine Energieversorgung der ersten Energie durch Laden oder Entladen jeder zweiten Batterie zu unterstützen.

9. Betätigungsverfahren nach Anspruch 7, wobei das Erzeugen des Steuersignals zum Steuern der Betätigungen der ersten Batterie und jeder zweiten Batterie auf Grundlage der erlangten Information umfasst:
Bestimmen, ob eine Abweichung eines Ladezustands, SOC, oder eines Gesundheitszustands, SOH, zwischen den zweiten Batterien größer als oder gleich wie ein Referenzwert ist; und
Erzeugen eines Steuersignals zum Steuern einer Durchführung eines Ausgleichens zwischen den zweiten Batterien.

10. Betätigungsverfahren nach Anspruch 7, wobei
das Erzeugen des Steuersignals zum Steuern der Betätigungen der ersten Batterie und jeder zweiten Batterie auf Grundlage der erlangten Information umfasst:
Bestimmen, ob in wenigstens einer der zweiten Batterien eine Anomalie auftritt; und
Erzeugen eines Steuersignals zum Steuern der Betätigungen der ersten Batterie und jeder zweiten Batterie, um auf Grundlage der Betätigung der ersten Batterie und Betätigungen jeder zu der Anomalie-aufweisenden zweiten Batterie anderen zweiten Batterie einen Notfall-Fahrmodus durchzuführen.

11. Betätigungsverfahren nach Anspruch 10, wobei das Erzeugen des Steuersignals zum Steuern der Betätigungen der ersten Batterie und der zweiten Batterie auf Grundlage der erhaltenen Information ferner umfasst:
Bestimmen, ob eine Anzahl Anomalie-aufweisender zweiter Batterien unter den zweiten Batterien größer als oder gleich wie ein vorfestgelegter Wert ist; und
Erzeugen eines Steuersignals zum Steuern der Betätigungen der ersten Batterie und der zweiten Batterie, um auf Grundlage der Betätigung der ersten Batterie den Notfall-Fahrmodus durchzuführen.

12. Betätigungsverfahren nach Anspruch 7, wobei das Erzeugen des Steuersignals zum Steuern der Betätigungen der ersten Batterie und jeder zweiten Batterie auf Grundlage der erhaltenen Information umfasst:
Bestimmen, ob eine Anomalie in der ersten Batterie auftritt; und
Erzeugen eines Steuersignals zum Steuern der Betätigungen der ersten Batterie und jeder zweiten Batterie, um auf Grundlage der Betätigung jeder zweiten Batterie den Notfall-Fahrmodus der Transportmittel durchzuführen.

13. Batteriesteuerungssystem, umfassend:
eine erste Batterie, welche dazu eingerichtet ist, eine Mehrzahl von Modulen, welche in einem Transportmittel für Mobilität umfasst sind, mit Energie zu versorgen;
eine Mehrzahl zweiter Batterien, welche in jedem Modul bereitgestellt sind und dazu eingerichtet sind, auf Grundlage einer Betätigung des Transportmittels das Modul als Hilfsenergiequelle für die erste Batterie mit Energie zu versorgen; und
eine Steuerungsvorrichtung nach einem der Ansprüche 1 bis 6.

14. Batteriesteuerungssystem nach Anspruch 13, wobei die Steuervorrichtung ferner dazu eingerichtet ist, zu steuern, um auf Grundlage einer Geschwindigkeit des Transportmittels eine Energieversorgung der ersten Batterie durch Laden oder Entladen jeder zweiten Batterie zu unterstützen.

15. Batteriesteuerungssystem nach Anspruch 13, wobei die Steuervorrichtung ferner dazu eingerichtet ist, ein Ausgleichen zwischen den zweiten Batterien durchzuführen, wenn eine Abweichung in einem Ladezustand, SOC, oder einem Gesundheitszustand, SOH, zwischen den zweiten Batterien größer als oder gleich wie ein Referenzwert ist.

## Revendications

1. Appareil de commande de batterie (200), comprenant :
une unité d'obtention d'informations (210) configurée pour obtenir des informations sur un moyen de transport, des informations sur une première batterie configurée pour fournir de l'énergie à une pluralité de modules inclus dans le moyen de transport, et des informations sur une pluralité de secondes batteries, dont l'une est fournie dans chaque module et configurée pour fournir de l'énergie à chaque module en tant que source d'alimentation auxiliaire pour la première batterie sur la base d'une opération du moyen de transport ; et
un dispositif de commande (220) configuré pour générer un signal de commande pour commander une opération de la première batterie et une opération de chaque seconde batterie sur la base des informations sur le moyen de transport, des informations sur la première batterie et des informations sur chaque seconde batterie,
dans lequel le dispositif de commande (220) est en outre configuré pour générer un signal de commande pour commander la décharge de chacune de la pluralité de secondes batteries sur la base d'une vitesse du moyen de transport.

2. Appareil de commande de batterie (200) selon la revendication 1, dans lequel le dispositif de commande (220) est en outre configuré pour générer un signal de commande pour commander la pluralité de secondes batteries pour assister l'alimentation électrique de la première batterie en chargeant ou en déchargeant chacune de la pluralité de secondes batteries sur la base d'une vitesse du moyen de transport.

3. Appareil de commande de batterie (200) selon la revendication 1, dans lequel le dispositif de commande (220) est en outre configuré pour générer un signal de commande pour commander de réaliser un équilibrage entre les secondes batteries lorsqu'un écart d'état de charge, SOC, ou d'état de santé, SOH, entre les secondes batteries est supérieur ou égal à une valeur de référence.

4. Appareil de commande de batterie (200) selon la revendication 1, dans lequel le dispositif de commande (220) est en outre configuré pour, lorsqu'une anomalie se produit dans au moins l'une des secondes batteries, générer un signal de commande pour commander les opérations de la première batterie et de la seconde batterie pour réaliser un mode de conduite d'urgence du moyen de transport sur la base de l'opération de la première batterie et des opérations des secondes batteries autres que celle présentant une anomalie.

5. Appareil de commande de batterie (200) selon la revendication 4, dans lequel le dispositif de commande (220) est en outre configuré pour, lorsqu'un nombre de secondes batteries présentant une anomalie parmi les secondes batteries est supérieur ou égal à une valeur prédéfinie, générer un signal de commande pour commander les opérations de la première batterie et de la seconde batterie pour réaliser le mode de conduite d'urgence du moyen de transport sur la base de l'opération de la première batterie.

6. Appareil de commande de batterie (200) selon la revendication 1, dans lequel le dispositif de commande (220) est en outre configuré pour, lorsqu'une anomalie se produit dans la première batterie, générer un signal de commande pour commander les opérations de la première batterie et de chacune de la pluralité de secondes batteries pour réaliser le mode de conduite d'urgence du moyen de transport sur la base de l'opération de chaque seconde batterie.

7. Procédé de fonctionnement d'un appareil de commande de batterie (200), le procédé de fonctionnement comprenant :
l'obtention, via une unité d'obtention d'informations (210) configurée pour obtenir des informations sur un moyen de transport, d'informations sur une première batterie configurée pour fournir de l'énergie à une pluralité de modules inclus dans le moyen de transport, et d'informations sur une pluralité de secondes batteries, dont l'une est fournie dans chaque module, et
configurée pour fournir de l'énergie à chaque module en tant que source d'énergie auxiliaire pour la première batterie sur la base d'une opération du moyen de transport ; et
la génération d'un signal de commande pour commander une opération de la première batterie et une opération de chaque seconde batterie sur la base des informations sur le moyen de transport, des informations sur la première batterie et des informations sur chaque seconde batterie,
dans lequel la génération d'un signal de commande pour commander une opération de la première batterie et une opération de la seconde batterie sur la base des informations sur le moyen de transport, des informations sur la première batterie et des informations sur la seconde batterie comprend :
la génération d'un signal de commande pour commander une charge et une décharge de chacune de la pluralité de secondes batteries sur la base d'une vitesse du moyen de transport.

8. Procédé de fonctionnement selon la revendication 7, dans lequel la génération du signal de commande pour commander les opérations de la première batterie et de chaque seconde batterie, sur la base des informations obtenues, comprend la génération d'un signal de commande pour commander chaque seconde batterie afin d'assister l'alimentation électrique de la première batterie en chargeant ou en déchargeant chaque seconde batterie sur la base d'une vitesse du moyen de transport.

9. Procédé de fonctionnement selon la revendication 7, dans lequel
la génération du signal de commande pour commander les opérations de la première batterie et de chaque seconde batterie, sur la base des informations obtenues comprend :
la détermination si un écart d'état de charge, SOC, ou d'état de santé, SOH, entre les secondes batteries est supérieur ou égal à une valeur de référence ; et
la génération d'un signal de commande pour commander de réaliser un équilibrage entre les secondes batteries.

10. Procédé de fonctionnement selon la revendication 7, dans lequel
la génération du signal de commande pour commander les opérations de la première batterie et de chaque seconde batterie, sur la base des informations obtenues comprend :
la détermination si une anomalie se produit dans au moins l'une des secondes batteries ; et
la génération d'un signal de commande pour commander les opérations de la première batterie et
chaque seconde batterie pour réaliser un mode de conduite d'urgence de la mobilité sur la base de l'opération de la première batterie et des opérations de chaque seconde batterie autre que la seconde batterie présentant une anomalie.

11. Procédé de fonctionnement selon la revendication 10, dans lequel la génération du signal de commande pour commander les opérations de la première batterie et de la seconde batterie, sur la base des informations obtenues comprend en outre :
la détermination si un nombre de secondes batteries présentant une anomalie parmi les secondes batteries est supérieur ou égal à une valeur prédéfinie ; et
la génération d'un signal de commande pour commander les opérations de la première batterie et de la seconde batterie pour réaliser le mode de conduite d'urgence de la mobilité sur la base de l'opération de la première batterie.

12. Procédé de fonctionnement selon la revendication 7, dans lequel la génération du signal de commande pour commander les opérations de la première batterie et de chaque seconde batterie, sur la base des informations obtenues comprend :
la détermination si une anomalie se produit dans la première batterie ; et
la génération d'un signal de commande pour commander les opérations de la première batterie et de chaque seconde batterie pour réaliser le mode de conduite d'urgence du moyen de transport sur la base de l'opération de chaque seconde batterie.

13. Système de commande de batterie comprenant :
une première batterie configurée pour fournir de l'énergie à une pluralité de modules inclus dans un moyen de transport mobile ;
une pluralité de secondes batteries fournies dans chaque module et configurées pour fournir de l'énergie au module en tant que source d'énergie auxiliaire pour la première batterie sur la base d'une opération du moyen de transport ; et
un appareil de commande selon l'une quelconque des revendications 1 à 6.

14. Système de commande de batterie selon la revendication 13, dans lequel l'appareil de commande est en outre configuré pour commander d'assister l'alimentation électrique de la première batterie en chargeant ou en déchargeant chaque seconde batterie sur la base d'une vitesse du moyen de transport.

15. Système de commande de batterie selon la revendication 13, dans lequel l'appareil de commande est en outre configuré pour commander de réaliser un équilibrage entre les secondes batteries lorsqu'un écart d'état de charge, SOC, ou d'état de santé, SOH, entre les secondes batteries est supérieur ou égal à une valeur de référence.
